Europäisches Patentamt

**European Patent Office**

**Office européen des brevets**

(11) Numéro de publication: **0 065 470**
**A1**

# (12) DEMANDE DE BREVET EUROPEEN

(21) Numéro de dépôt: **82420044.8**

(22) Date de dépôt: **01.04.82**

(51) Int. Cl.³: **H 02 G 1/06**

(30) Priorité: **13.05.81 FR 8109882**

(43) Date de publication de la demande: **24.11.82**
**Bulletin 82/47**

(84) Etats contractants désignés: **AT BE CH DE GB IT LI NL SE**

(71) Demandeur: **SOCIETE CIVILE PARTICULIERE INNOVATION PROMOTION S.C.I.P., Chemin Baronna, F-69480 Anse (FR)**

(72) Inventeur: **Paccalin, Marc, 20 Rue Elie Rochette, F-69007 Lyon (FR)**
Inventeur: **Pomeret, Jean, Chemin Baronna, F-69480 Anse (FR)**

(74) Mandataire: **Maureau, Pierre, Cabinet GERMAIN & MAUREAU Le Britannia - Tour C 20, Boulevard E. Déruelle, F-69003 Lyon (FR)**

(54) Galet pour la pose de câbles dans des tranchées ou sur des caniveaux.

(57) Ce dispositif à galet est destiné au déroulage de câbles souterrains et à leur pose au fond de tranchées ou sur des caniveaux; il est notamment utilisable en complément d'un appareil motorisé pour le déroulage de câbles.

Le dispositif comprend un support (1, 2, 3) prévu pour reposer sur le sol ou sur les bords d'un caniveau par ses deux côtés longitudinaux, mais ouvert à sa partie inférieure. Le galet (5) est porté par un axe (6) qui n'est lié de façon permanente qu'à un seul côté du support, par exemple par un montage pivotant, de manière à permettre le dégagement du câble (8) vers le bas, entre les deux côtés longitudinaux (1, 2) du support. La pose du câble (8) s'effectue ainsi sans avoir à déplacer latéralement le dispositif.

Application à la pose de câbles électriques.

La présente invention se rapporte à un galet destiné au déroulage de câbles souterrains et à leur pose soit directement au fond de tranchées, soit sur des caniveaux. Ce galet est utilisable en complément d'un appareil motorisé pour le déroulage de câbles souterrains et, notamment, en complément de l'appareil faisant l'objet de la demande de brevet français N° 78 28 563 du 29 Septembre 1978, au nom de la Déposante S C I P (publiée sous le N° 2 437 718).

L'appareil décrit dans la demande de brevet citée permet, après tirage du câble, le dégagement de ce dernier sous l'appareil et à l'intérieur de l'appareil, de sorte que la pose du câble peut être effectuée sans déplacement latéral de l'appareil. L'objet de la présente invention est un galet conçu selon la même idée, c'est-à-dire permettant de dégager le câble tiré en le faisant passer par la partie inférieure et à l'intérieur du dispositif, donc sans avoir à déplacer le dispositif.

A cet effet, le galet selon l'invention, pour la pose de câbles dans des tranchées ou sur des caniveaux, comprend essentiellement un support apte à reposer sur le sol ou sur les bords d'un caniveau par ses deux côtés longitudinaux, mais ouvert à sa partie inférieure, le galet proprement dit étant porté par un axe qui n'est lié, de façon permanente, qu'à un seul côté du support précité, de manière à permettre le dégagement du câble vers le bas, entre les deux côtés longitudinaux du support.

Le dispositif objet de l'invention comprend ainsi un support, pouvant être réalisé sous la forme d'un châssis tubulaire, et un galet proprement dit, notamment en forme de diabolo, sur lequel le câble repose au cours de son déroulage, l'agencement de l'ensemble étant tel que le câble, une fois tiré, puisse être éloigné du galet et posé au fond d'une tranchée ou sur un caniveau par une manoeuvre simple, ne nécessitant ni soulèvement, ni déplacement latéral du dispositif. Ce résultat est particulièrement intéressant si l'on travaille dans une tranchée étroite et si l'on doit poser successivement plusieurs câbles.

Suivant une première forme de réalisation de l'invention, le galet proprement dit est monté tournant sur un axe qui lui-même pivote dans un plan transversal,des moyens étant prévus pour maintenir l'axe horizontal en vue du déroulage d'un câble,ou pour libérer cet axe et permettre ainsi l'effacement du galet vers le bas,en vue de la pose du câble.En position horizontale,le galet ferme par exemple une partie en " C" du support,ouverte vers le bas,qui est traversée par le câble à dérouler, tandis que le pivotement du galet vers le bas ouvre cette partie en " C" et permet la descente du câble à poser. Cette disposition évite tout échappement du câble au cours de son déroulage.

Dans le cas où la disposition précédemment définie est retenue, les moyens prévus pour maintenir l'axe du galet horizontal, ou pour libérer cet axe et permettre l'effacement du galet vers le bas, sont constitués par un élément mobile pivotant autour d'un axe horizontal, et appartenant à la partie en " C" du support,cet élément mobile portant un tube apte à retenir l'extrémité libre de l'axe du galet, ou à libérer ladite extrémité lorsque l'élément en question est relevé.Le seul poids de cet élément mobile le maintient normalement dans sa position abaissée, laquelle permet la retenue en position horizontale de l'axe du galet. Cependant,pour éviter toute libération non désirée de l'axe du galet,des moyens de verrouillage,aptes à immobiliser ledit élément mobile dans sa position de retenue de l'extrémité libre de l'axe du galet,sont avantageusement prévus. Ces moyens de verrouillage sont constitués,par exemple, par un doigt de retenue tangentiel monté pivotant sur le tube destiné à retenir l'axe du galet,et par une pièce en U solidaire de l'un des côtés longitudinaux du châssis,le doigt de retenue étant apte à reposer,par l'une de ses extrémités,dans la pièce en U.

3

Suivant une deuxième forme de réalisation de l'invention, l'axe du galet proprement dit est porté par un cadre assemblé à l'un des montants d'un portique, un espace suffisant pour le passage d'un câble étant ménagé entre ledit cadre et l'autre montant du portique, ainsi qu'entre le cadre et la traverse supérieure du portique. Dans ce cas, la conformation même du dispositif permet le dégagement du câble, depuis la gorge du galet jusqu'au fond de la tranchée ou du caniveau, sans qu'aucun élément pivotant soit nécessaire et, bien entendu, toujours sans nécessité de déplacement du dispositif. Des moyens de réglage, notamment de la longueur de la traverse supérieure du portique, peuvent être cependant prévus par l'adaptation du dispositif à diverses largeurs de caniveaux.

Suivant une autre caractéristique, le cadre portant l'axe du galet est assemblé de façon non permanente à l'un des montants du portique, et ce cadre comporte, du côté opposé à celui prévu pour son assemblage au portique, des moyens de fixation d'un pied amovible, permettant audit cadre de reposer sur le sol, l'axe du galet étant horizontal, lorsqu'il est séparé du portique. Ainsi l'on obtient un galet d'alignement classique, stable puisqu'il repose sur le sol par trois points au moins. Séparé du portique et placé en position couchée sur le côté, le même cadre peut aussi être utilisé comme support d'un galet d'axe vertical, constituant un galet d'angle (éventuellement en association avec d'autres galets identiques et utilisés de la même manière, pour réaliser un train de galets d'angle).

Dans le cas où le galet précédemment défini est appliqué à la pose de câbles sur des caniveaux, des chapes d'appui sont prévues aux deux extrémités du cadre portant l'axe du galet, ainsi qu'à l'extrémité inférieure du montant du portique situé du côté opposé au côté d'assemblage du cadre audit portique. Le dispositif s'adapte ainsi facilement sur les deux bords d'un caniveau.

De toute façon, l'invention sera mieux comprise à

4

l'aide de la description qui suit, en référence au dessin schématique annexé représentant, à titre d'exemples non limitatifs, deux formes d'exécution de ce galet pour la pose de câbles, et illustrant l'utilisation de ce galet:

Figure 1 est une vue en perspective d'un galet pour la pose de câbles conforme à l'invention, dans lequel le galet proprement dit est monté pivotant dans un plan transversal;

Figure 2 est une vue de face du galet de figure 1, avec indication des positions de déroulage et de pose d'un câble;

Figure 3 est une vue de côté correspondant à figure 2;

Figure 4 est une vue en perspective d'un cadre-support de galet pour la pose de câbles conforme à l'invention, ce cadre étant destiné à être assemblé à un portique;

Figure 5 est une vue en perspective de l'ensemble "cadre + portique ", mis en place au-dessus d'un caniveau sur lequel doit être posé un câble.

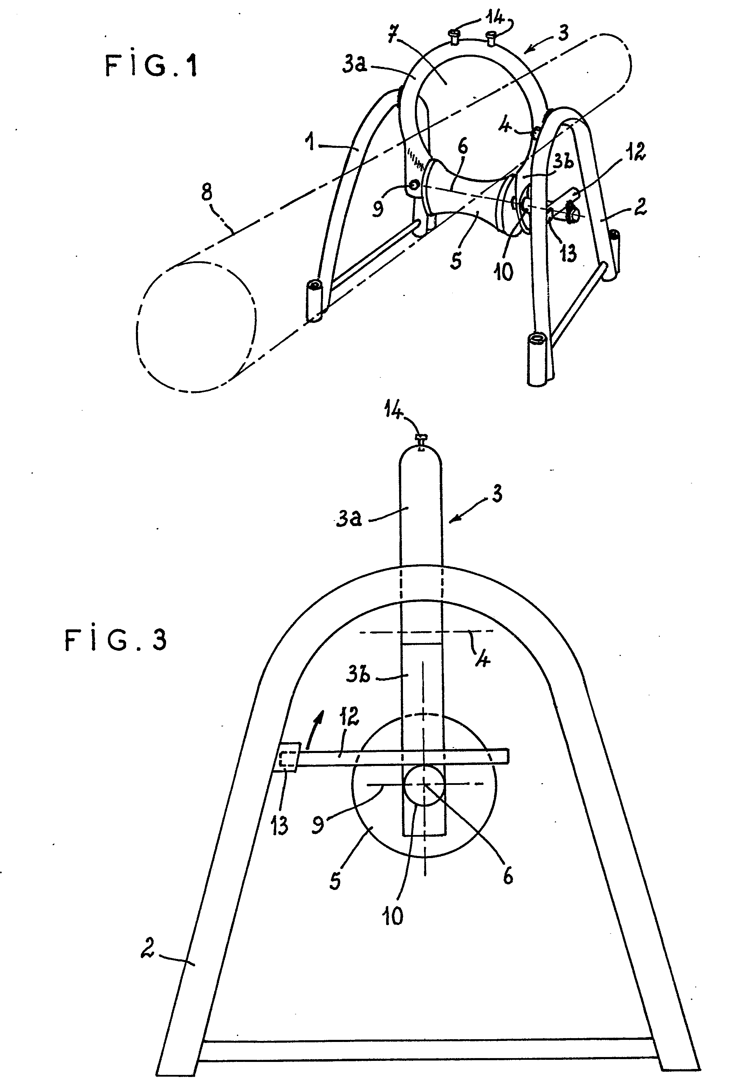

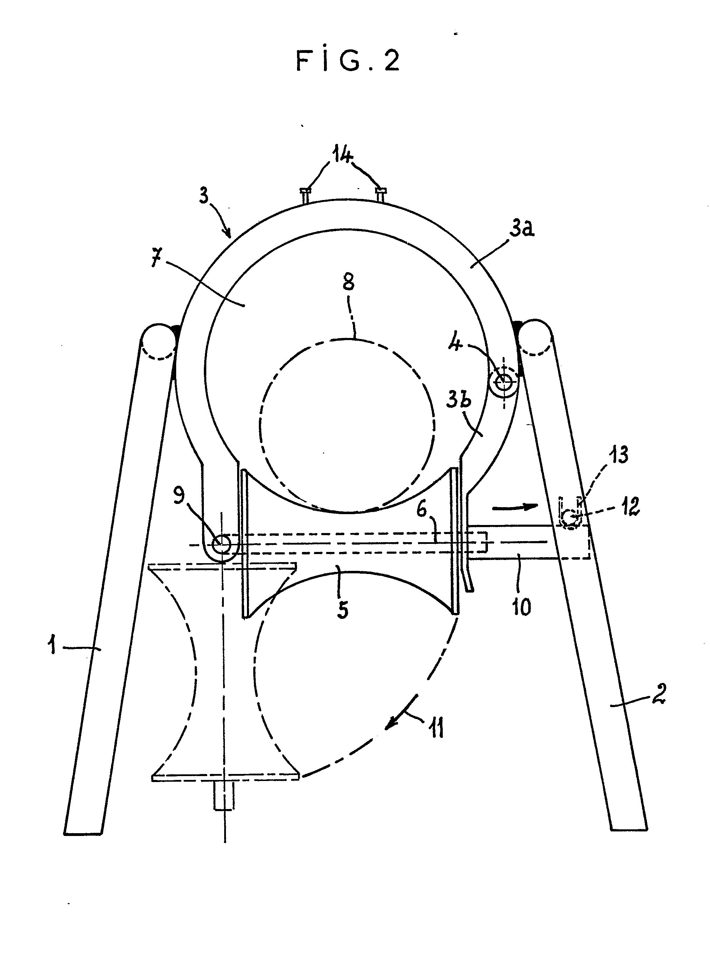

Dans une première forme d'exécution représentée sur les figures 1 à 3, le support du galet, réalisé en tubes, comprend deux chaises latérales 1 et 2, par lesquelles le dispositif repose sur le sol. Les chaises 1 et 2 sont reliées, à leur sommet, par une partie en " C" 3, ouverte vers le bas. Cette partie en " C " se compose d'un élément fixe 3a, et d'un élément mobile 3b pouvant pivoter autour d'un axe horizontal 4, relativement à la partie fixe 3a.

Le galet proprement dit 5, en forme de " diabolo", est monté libre en rotation autour d'un axe 6; en position normale, il complète la partie annulaire 3 de manière à définir une ouverture circulaire 7, à travers laquelle est engagé le câble 8 à tirer. Cette configuration circulaire empêche tout échappement du câble 8. Une extrémité de l'axe 6 est liée à l'élément fixe 3a par une

5

articulation permettant un pivotement autour d'un autre axe 9, horizontal et perpendiculaire à l'axe 6. L'autre extrémité de cet axe 6 est retenue par un tube 10 solidaire de l'élément mobile 3b.

Pour effacer le galet 5 et permettre le dégagement du câble 8,il suffit de relever l'élément 3b, ce qui fait reculer le tube 10 et libère une extrémité de l'axe 6, permettant ainsi le pivotement du galet suivant la flèche 11 autour de l'axe 9 (voir figure 2).

Pour éviter tout recul non désiré du tube 10,ce dernier porte un doigt de retenue tangentiel 12, dont une extrémité repose dans une pièce en U 13 solidaire de l'une des chaises 2. Ce doigt 12 est monté pivotant sur le tube 10, une butée limitant cependant son pivotement.Pour libérer le galet 5, il faut d'abord autoriser le pivotement de l'élément 3b en sortant le doigt de retenue 12 de la pièce complémentaire 13. Cette manoeuvre peut s'effectuer soit manuellement, soit à distance à l'aide d'une perche de manoeuvre.

La mise en place et le retrait du dispositif peuvent également être réalisés à l'aide de la même perche,depuis le bord de la tranchée, grâce à deux tétons 14 prévus au sommet de la partie annulaire 3 et engageables dans des encoches complémentaires d'une plaque prévue à une extrémité de ladite perche.

En utilisant une telle perche de manoeuvre,un déroulage de câble sur galets peut s'effectuer facilement dans une tranchée de 0,30 m. de largeur. Il n'est plus nécessaire de descendre dans la tranchée et d'en remonter,ce qui évite les chutes de pierres habituellement provoquées par le déplacement de personnes.

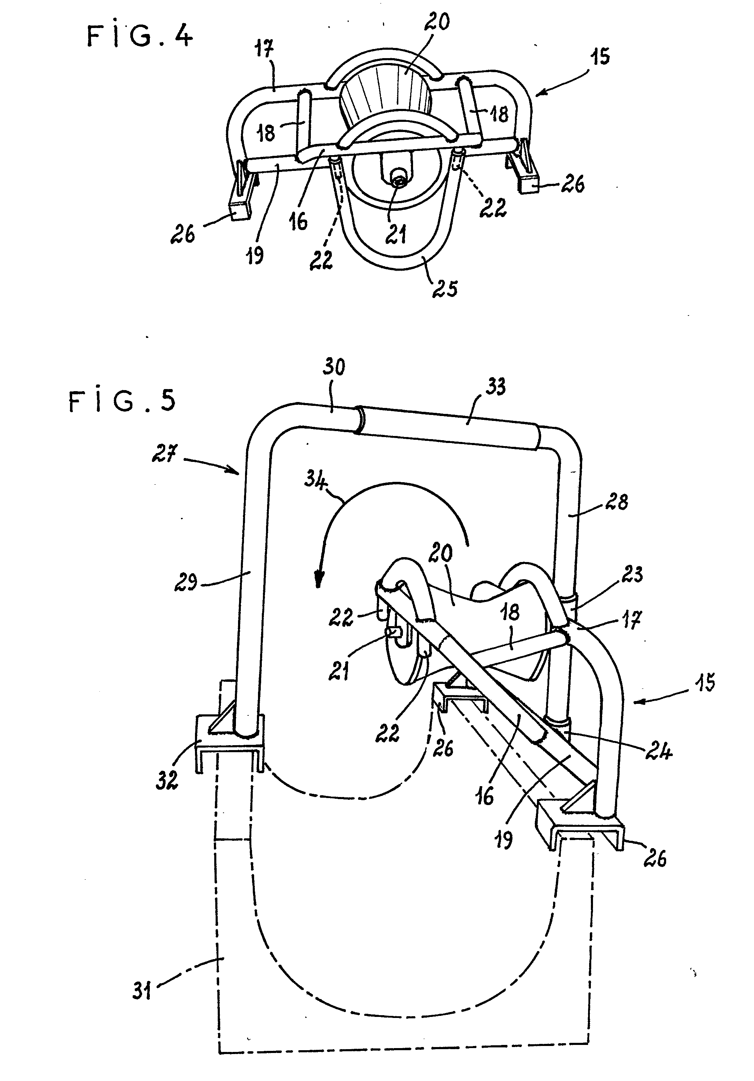

Dans une seconde forme d'exécution de l'invention, l'élément de base du dispositif est un cadre 15,représenté seul sur la figure 4. Ce cadre 15, réalisé en tubes, comporte un étrier 16 relié à sa traverse supérieure 17 par deux haubans 18, l'étrier 16 étant lui-même raccordé à la traverse inférieure 19 du cadre 15. Le galet

6

proprement dit 20, toujours en forme de "diabolo",est monté sur un axe dont une extrémité est supportée par la traverse supérieure 17 du cadre 15, et dont l'autre extrémité est maintenue dans un palier 21 porté par la partie médiane de l'étrier 16. De part et d'autre de ce palier 21, l'étrier 16 comporte deux tétons 22, tournés vers le bas. La traverse supérieure 17 du cadre 15 porte en son milieu une douille 23; sur la traverse inférieure 19 est placée une autre douille 24, située à l'aplomb de la douille 23 (voir aussi figure 5).

Comme le montre la figure 4, le cadre 15 précédemment décrit permet d'abord la réalisation d'un galet classique. Dans ce but, il suffit d'engager les deux tétons 22 sur les extrémités d'un pied tubulaire amovible 25 en forme de " U ". L'ensemble peut alors reposer sur le sol par les deux points d'appui 26,prévus aux extrémités du cadre 15, et par le pied 25 dont la hauteur est telle que l'axe du galet 20 soit horizontal.

Pour l'obtention d'un dispositif de pose de câbles complet et conforme à l'invention, le cadre 15 est associé à un portique,désigné dans son ensemble par 27 (voir figure 5),et composé de deux montants 28 et 29 réunis à leur sommet par une traverse 30. L'un des montants 28 du portique 27 est engagé dans les deux douilles 23 et 24 que comporte le cadre 15, et l'ensemble du portique 27 est placé dans un plan perpendiculaire à celui du cadre 15.

La figure 5 illustre l'utilisation du dispositif ici décrit pour la pose de câbles sur un caniveau 31. Dans cette application particulière,les deux points d'appui 26, aux extrémités du cadre 15, sont réalisés sous la forme de chapes d'appui prévues pour s'adapter sur l'un des bords du caniveau 31. L'extrémité inférieure du montant 29 du portique 27 comporte une chape d'appui similaire 32, prévue pour s'adapter sur l'autre bord du caniveau 31. La traverse supérieure 30 du portique 27 comporte un manchon de réglage 33,permettant de rapprocher ou d'écarter les deux montants 28 et 29, suivant la largeur du caniveau 31.

Comme l'indique la flèche 34, après déroulage d'un câble, ce dernier peut être dégagé du dispositif et posé sur le caniveau 31, sans déplacer le dispositif, le passage du câble se faisant :

-dans l'espace ménagé entre le galet 20 et l'étrier 16 du cadre 15, d'une part, et la traverse 30 du portique 27, d'autre part;

-puis dans l'espace qui subsiste entre l'étrier 16 du cadre 15 et le montant 29 du portique 27.

Le dispositif objet de l'invention est destiné plus particulièrement, quoique non exclusivement, à la pose de câbles électriques.

Comme il va de soi, l'invention ne se limite pas aux seules formes d'exécution de ce galet pour la pose de câbles qui ont été décrites ci-dessus, à titre d'exemples; elle en embrasse, au contraire, toutes les variantes de réalisation et d'application conçues selon le même principe, quels qu'en soient les détails constructifs notamment en ce qui concerne la forme des supports, cadres ou portiques, et quelles qu'en soient les adaptations particulières(pour la pose directement au fond d'une tranchée, ou sur un caniveau).

-REVENDICATIONS -

1.- Galet destiné au déroulage de câbles souterrains et à leur pose au fond de tranchées ou sur des caniveaux, notamment utilisable en complément d'un appareil motorisé de déroulage, <u>caractérisé en ce qu'il</u> comprend un support (1,2,3; 15,27) apte à reposer sur le sol ou sur les bords d'un caniveau (31) par ses deux côtés longitudinaux, mais ouvert à sa partie inférieure, le galet proprement dit (5;20) étant porté par un axe (6) qui n'est lié, de façon permanente, qu' à un seul côté (1;28) du support précité, de manière à permettre le dégagement du câble (8) vers le bas, entre les deux côtés longitudinaux (1,2;28,29) du support.

2.- Galet pour la pose de câbles selon la revendication 1, caractérisé en ce que le galet proprement dit (5) est monté tournant sur un axe (6) qui lui-même pivote dans un plan transversal, des moyens (3b,10) étant prévus pour maintenir l'axe (6) horizontal en vue du déroulage du câble (8), ou pour libérer cet axe (6) et permettre ainsi l'effacement du galet (5) vers le bas, en vue de la pose du câble (8).

3.- Galet pour la pose de câbles selon la revendication 2, caractérisé en ce que le support comprend une partie en " C" (3), ouverte vers le bas mais fermée par le galet (5) en position horizontale, cette partie en " C" étant traversée par le câble (8) à dérouler, tandis que le pivotement du galet (5) vers le bas ouvre ladite partie en " C" (3) et permet la descente du câble (8) à poser.

4.-Galet pour la pose de câbles selon la revendication 3, caractérisé en ce que les moyens prévus pour maintenir l'axe (6) du galet (5) horizontal, ou pour libérer cet axe (6) et permettre l'effacement du galet (5) vers le bas, sont constitués par un élément mobile (3b) pivotant autour d'un axe horizontal (4), et appartenant à la partie en " C" (3) du support, cet élément mobile (3b) portant un tube (10) apte à retenir l'extrémité libre de l'axe (6) du galet (5), ou à libérer ladite extrémité lorsque l'élément en question (3b) est relevé.

5.- Galet pour la pose de câbles selon la revendication 4,caractérisé en ce que sont prévus des moyens de verrouillage (12,13 ),aptes à immobiliser ledit élément mobile (3b) dans sa position de retenue de l'extrémité libre de l'axe (6) du galet (5).

6.- Galet pour la pose de câbles selon la revendication 5,caractérisé en ce que les moyens de verrouillage sont constitués par un doigt de retenue tangentiel(12) monté pivotant sur le tube (10) destiné à retenir l'axe (6) du galet (5), et par une pièce en U (13) solidaire de l'un des côtés longitudinaux (2) du châssis,le doigt de retenue (12) étant apte à reposer,par l'une de ses extrémités, dans la pièce en " U " (13).

7.- Galet pour la pose de câbles selon la revendication 1,caractérisé en ce que l'axe du galet proprement dit (20) est porté par un cadre (15) assemblé à l'un des montants (28) d'un portique (27), un espace suffisant pour le passage d'un câble étant ménagé entre ledit cadre (15) et l'autre montant (29) du portique (27),ainsi qu'entre le cadre (15) et la traverse supérieure(30) du portique (27).

8.- Galet pour la pose de câbles selon la revendication 7,caractérisé en ce que sont prévus des moyens de réglage (33) de la longueur de la traverse supérieure (30) du portique.

9.- Galet pour la pose de câbles selon la revendication 7 ou 8,caractérisé en ce que le cadre (15)portant l'axe du galet (20) est assemblé de façon non permanente à l'un des montants (28) du portique (27) ,et en ce que ce cadre (15) comporte, du côté opposé à celui prévu pour son assemblage au portique (27), des moyens de fixation (23) d'un pied amovible (25), permettant audit cadre (15) de reposer sur le sol, l'axe du galet (20) étant horizontal, lorsqu'il est séparé du portique.

10

10.- Galet pour la pose de câbles selon l'une quelconque des revendications 7 à 9, et plus particulièrement destiné à la pose de câbles sur des caniveaux, caractérisé en ce que des chapes d'appui (26,32),s'adaptant sur les deux bords d'un caniveau (31),sont prévues aux deux extrémités du cadre (15) portant l'axe du galet (20), ainsi qu'à l'extrémité inférieure du montant(29) du portique (27) situé du côté opposé au côté d'assemblage du cadre (25) audit portique.

11.- Galet pour la pose de câbles selon l'une quelconque des revendications 1 à 10,caractérisé en ce que des tétons (14) sont prévus au sommet de son support(1,2,3), pour permettre la mise en place et le retrait du dispositif à l'aide d'une perche.

FIG.1

FIG.3

0065470

# FİG.2

0065470

FIG.4

FIG.5

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A,D | FR-A-2 437 718  (S.C.I.P.)<br>*Page  2, ligne 3 - page 6, ligne 26; figures 1,2* | 1 | H 02 G    1/06 |
| A | DE-A-2 311 705  (ERBST)<br>*Pages 1-6; figures 1-3* | 1,2 | |
| A | DE-C-  508 975  (A.E.G.)<br>*Page 2, lignes 27-36; figures* | 1 | |
| A | DE-B-1 120 536  (FELTEN & GUILLEAUME)<br>*Colonne 1, ligne 50 - colonne 2, ligne  36;  colonne  3, ligne 8 - colonne 4, ligne 4; figures* | 1,2 | |

**DOMAINES TECHNIQUES RECHERCHES (Int. Cl. ³)**

H 02 G    1/00
B 65 H   51/00

Le présent rapport de recherche a été établi pour toutes les revendications

| Lieu de la recherche | Date d'achèvement de la recherche | Examinateur |
|---|---|---|
| LA HAYE | 19-08-1982 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82